# EUROPEAN PATENT APPLICATION

(11) **EP 4 502 655 A1**
(43) Date of publication of application: **05.02.2025**
(21) Application number: 23779823.6
(22) Date of filing: 20.03.2023
(51) Int. Cl.: G01S 15/32, G01S 7/526, G01S 7/527, G01S 15/50

(54) **OBJECT DETECTION DEVICE**

(30) Priority: 31.03.2022 JP 2022059990
(71) Applicant: AISIN CORPORATION, Kariya-shi, Aichi 448-8650 (JP)
(72) Inventor: SUGAE, Ippei, Kariya-shi, Aichi 448-8650 (JP); INABA, Hisashi, Kariya-shi, Aichi 448-8650 (JP)
(74) Representative: TBK
(86) International application number: PCT/JP2023/010838
(87) International publication number: WO 2023/189807

(57) **Abstract**

An object detection device (200) of an embodiment includes a transmitting unit (301) that transmits a transmission wave in which a plurality of ultrasonic waves of different frequencies are multiplexed, a receiving unit (303) that receives a reflected wave produced by the reflection of the transmission wave from an object, a frequency analysis unit (305) that generates reflected wave frequency information indicating a plurality of frequency components contained in the reflected wave, and separated echo information indicating temporal changes in amplitude value for each of the plurality of frequency components contained in the reflected wave, a distance information generation unit (306) that generates distance information about the distance to the object, based on the separated echo information, a Doppler detection unit (307) that calculates a Doppler frequency, based on the reflected wave frequency information, transmission wave frequency information indicating a plurality of frequency components contained in the transmission wave, and frequency interval information indicating the interval between the plurality of frequency components contained in the transmission wave, and a correction unit (309) that corrects the distance information, based on the Doppler frequency.

## Description

### TECHNICAL FIELD

An embodiment of the present invention relates to an object detection device.

### BACKGROUND ART

Systems for assisting the travel of a moving object such as a vehicle use an object detection device that detects obstacles present around the moving object by transmitting and receiving ultrasonic waves.

### CITATIONS LIST

### PATENT LITERATURE

Patent Literature 1: WO 2017/141370 A

### SUMMARY OF INVENTION

### TECHNICAL PROBLEMS

In the object detection device using ultrasonic waves, multipath may occur in which reflected waves from the same obstacle through different paths are received by a receiving unit due to the shape of the obstacle or the effects of the surrounding environment. When such multipath occurs, obstacle detection accuracy may be reduced by a phenomenon such as a decrease in amplitude value due to an anti-phase wave.

It is a problem to be solved by an embodiment of the present invention to provide an object detection device that can reduce the effects of multipath to improve obstacle detection accuracy.

### SOLUTIONS TO PROBLEMS

An object detection device as an embodiment of the present invention includes a transmitting unit that transmits a transmission wave in which a plurality of ultrasonic waves of different frequencies are multiplexed, a receiving unit that receives a reflected wave produced by reflection of the transmission wave from an object, a frequency analysis unit that generates reflected wave frequency information indicating a plurality of frequency components contained in the reflected wave, and separated echo information indicating temporal changes in amplitude value for each of the plurality of frequency components contained in the reflected wave, a distance information generation unit that generates distance information about a distance to the object, based on the separated echo information, a Doppler detection unit that calculates a Doppler frequency, based on the reflected wave frequency information, transmission wave frequency information indicating a plurality of frequency components contained in the transmission wave, and frequency interval information indicating an interval between the plurality of frequency components contained in the transmission wave, and a correction unit that corrects the distance information, based on the Doppler frequency.

According to the above configuration, the distance information can be generated using the plurality of frequency components, and the distance information can be corrected based on the Doppler frequency calculated with high accuracy using the frequency interval information. This can reduce multipath effects to improve obstacle detection accuracy.

The Doppler detection unit may interpolate loss of the plurality of frequency components contained in the reflected wave, based on the frequency interval information, and calculate the Doppler frequency based on the difference between the interpolated frequency components of the reflected wave and the frequency components of the transmission wave.

Consequently, the Doppler frequency can be calculated with high accuracy.

The distance information generation unit may generate the distance information, based on a maximum amplitude value that is the largest of a plurality of the amplitude values detected for the individual frequency components at the same time, the maximum amplitude value being obtained from the separated echo information.

Consequently, even when some of the plurality of frequency components are lost due to multipath effects, highly accurate distance information can be generated.

The distance information generation unit may generate the distance information based on corrected echo information indicating temporal changes in the maximum amplitude value.

By using the corrected echo information as described above, multipath effects can be effectively reduced to generate highly accurate distance information.

The transmission of the transmission wave and the reception of the reflected wave may be performed using a common transducer.

This reduces paths of the transmission wave and the received wave to a bare minimum, and thus can reduce the probability of occurrence of multipath. Furthermore, it is not necessary to separately provide a transducer for each frequency component, which can prevent an increase in cost.

### BRIEF DESCRIPTION OF DRAWINGS

FIG. 1 is a top view illustrating an example of a configuration of a vehicle according to an embodiment.
FIG. 2 is a block diagram illustrating an example of a hardware configuration of a vehicle control system according to the embodiment.
FIG. 3 is a perspective view illustrating an example of a configuration of a transducer according to the embodiment.
FIG. 4 is a diagram illustrating an example of a method of calculating distance by the TOF method.
FIG. 5 is a block diagram illustrating an example of a functional configuration of an object detection device according to the embodiment.
FIG. 6 is a diagram illustrating an example of separated echo information according to the embodiment.
FIG. 7 is a diagram illustrating an example of corrected echo information according to the embodiment.
FIG. 8 is a diagram illustrating an example of FFT analysis results on a reflected wave in the embodiment.
FIG. 9 is a flowchart illustrating an example of processing in the object detection device according to the embodiment.
FIG. 10 is a perspective view illustrating an example of a configuration of a transducer according to a modification.

### DESCRIPTION OF EMBODIMENTS

Hereinafter, an embodiment of the present disclosure will be described with reference to the drawings. Configurations of the embodiment described below and functions and effects brought about by the configurations are merely examples, and the present invention is not limited to the following descriptions.

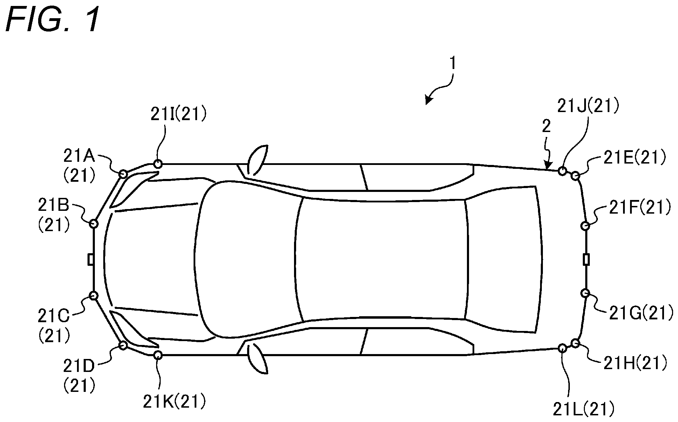

FIG. 1 is a top view illustrating an example of a configuration of a vehicle 1 according to an embodiment. The vehicle 1 is an example of a moving object equipped with an object detection device of the present embodiment. The object detection device of the present embodiment is a device that detects obstacles present around the vehicle 1, based on information such as time of flight (TOF) or Doppler shifts obtained by transmitting transmission waves (ultrasonic waves) from the vehicle 1 and receiving reflected waves produced by the reflection of the transmission waves from objects.

The object detection device of the present embodiment includes a plurality of transceivers 21A to 21L (hereinafter, the plurality of transceivers 21A to 21L will be abbreviated as the transceivers 21 when it is not necessary to distinguish them). Each transceiver 21 is installed on a vehicle body 2 as the exterior of the vehicle 1, transmits a transmission wave toward the outside of the vehicle body 2, and receives a reflected wave from an object present outside the vehicle body 2. In the example illustrated in FIG. 1, the four transceivers 21A to 21D are disposed at front end portions of the vehicle body 2, the four transceivers 21E to 21H are disposed at rear end portions, the two transceivers 21I and 21J are disposed at right side portions, and the two transceivers 21K and 21L are disposed at left side portions. Note that the number and installation positions of the transceivers 21 are not limited to this example.

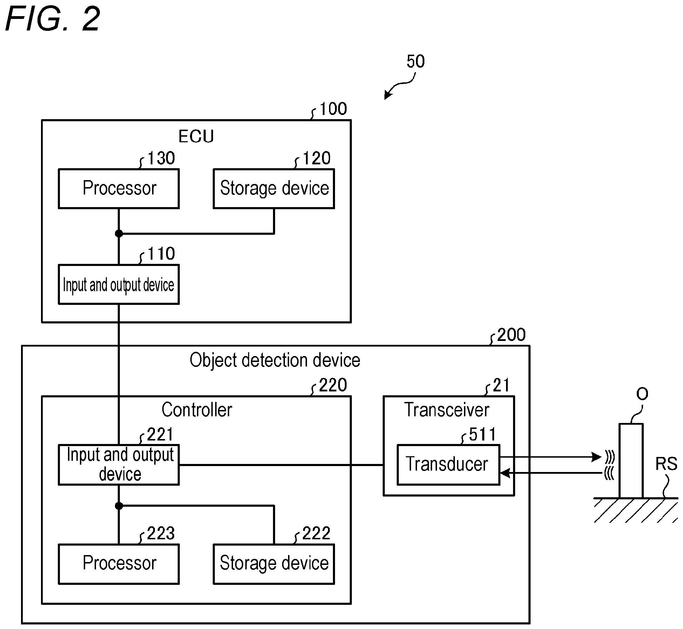

FIG. 2 is a block diagram illustrating an example of a hardware configuration of the vehicle control system 50 according to the embodiment. The vehicle control system 50 performs processing to control the vehicle 1, based on information output from an object detection device 200. The vehicle control system 50 of the present embodiment includes an ECU 100 and the object detection device 200.

The object detection device 200 includes the plurality of transceivers 21 and a controller 220. Each transceiver 21 includes a transducer 511 configured using a piezoelectric element or the like, an amplifier, and others, and enables the transmission and reception of ultrasonic waves by the vibration of the transducer 511. Specifically, each transceiver 21 transmits an ultrasonic wave generated in response to the vibration of the transducer 511 as a transmission wave Wt, and detects the vibration of the transducer 511 caused by a reflected wave Wr produced by the reflection of the transmission wave Wt from an object such as an obstacle O or a road surface RS. The vibration of the transducer 511 is converted into an electric signal. Based on the electric signal, TOF corresponding to the distance from the transceiver 21 to the obstacle O, Doppler shift information corresponding to the relative speed of the obstacle O, or the like can be obtained.

Note that FIG. 2 illustrates a configuration in which both the transmission of the transmission wave Wt and the reception of the reflected wave Wr are performed using the common transducer 511, but the configuration of the transceiver 21 is not limited to this. For example, a transducer for transmitting the transmission wave Wt and a transducer for receiving the reflected wave Wr may be separately provided.

The controller 220 includes an input and output device 221, a storage device 222, and a processor 223. The input and output device 221 is an interface device that enables the transmission and reception of information between the controller 220 and the outside (such as the transceivers 21 and the ECU 100). The storage device 222 includes main memory such as read-only memory (ROM) and random-access memory (RAM), and auxiliary storage such as a hard disk drive (HDD) and a solid-state drive (SSD). The processor 223 is an integrated circuit that performs various types of processing to implement functions of the controller 220, and may be configured using, for example, a central processing unit (CPU) that operates according to a program, an application-specific integrated circuit (ASIC) designed for a specific application, or the like. The processor 223 performs various types of arithmetic processing and control processing by reading and executing a program stored in the storage device 222.

The ECU 100 is a unit that performs various types of processing to control the vehicle 1, based on various types of information obtained from the object detection device 200 and others. The ECU 100 includes an input and output device 110, a storage device 120, and a processor 130. The input and output device 110 is an interface device that enables the transmission and reception of information between the ECU 100 and external mechanisms (such as the object detection device 200, a drive mechanism, a braking mechanism, a steering mechanism, a transmission mechanism, an in-vehicle display, a speaker, and various sensors). The storage device 120 includes main memory such as ROM and RAM, and auxiliary storage such as an HDD and an SSD. The processor 130 is an integrated circuit that performs various types of processing to implement functions of the ECU 100, and may be configured using, for example, a CPU, an ASIC, or the like. The processor 130 reads a program stored in the storage device 120 and performs various types of arithmetic processing and control processing.

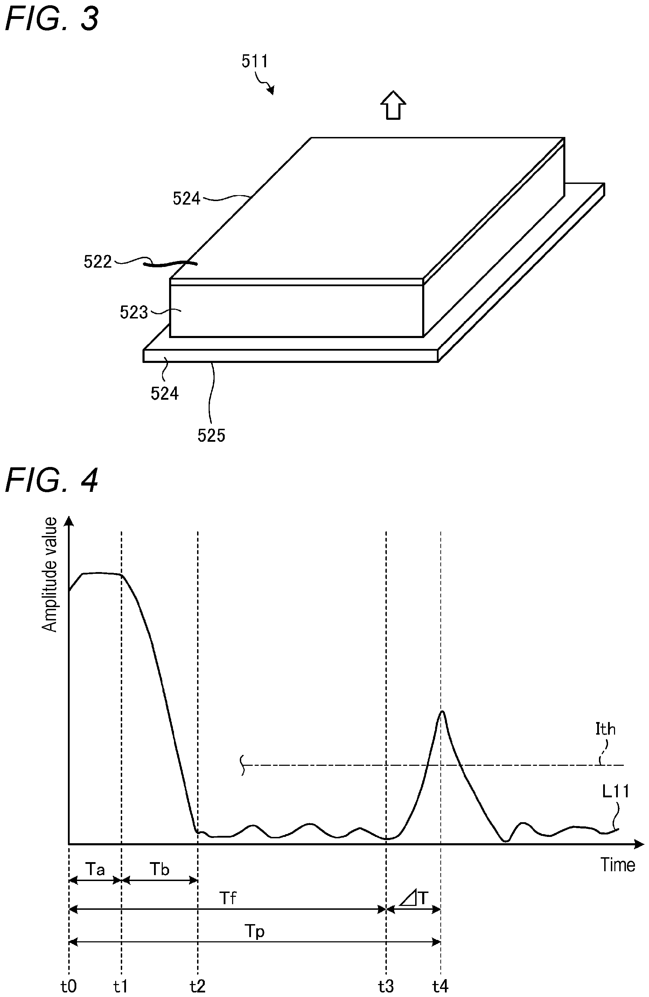

FIG. 3 is a perspective view illustrating an example of a configuration of the transducer 511 according to the embodiment. The transducer 511 includes an upper electrode 521, an upper wire 522, a piezoelectric body 523, a lower electrode 524, and lower wiring 525.

The upper electrode 521 is provided on the upper surface of the piezoelectric body 523 and is used as an electrode for voltage application. The upper wire 522 is connected to the upper electrode 521 and a predetermined AC power supply. The lower electrode 524 is provided on the lower surface of the piezoelectric body 523 and is used as a ground electrode. The lower wiring 525 is connected to the lower electrode 524 and a predetermined grounding electrode. When an AC voltage is applied, the piezoelectric body 523 vibrates due to a piezoelectric effect, generating an ultrasonic wave (transmission wave) traveling in a direction indicated by an arrow in the drawing.

Note that the above configuration is an example, and the configuration of the transducer 511 is not limited to this. For example, the upper electrode 521 may be used as a ground electrode, and the lower electrode 524 as an electrode for voltage application.

FIG. 4 is a diagram illustrating an example of a method of calculating distance by the TOF method. FIG. 4 illustrates an envelope L11 indicating temporal changes in the amplitude value (signal intensity) of an ultrasonic wave transmitted and received by the transceiver 210. In a graph illustrated in FIG. 4, the horizontal axis corresponds to time (TOF), and the vertical axis corresponds to the amplitude value of the ultrasonic wave transmitted and received by the transceiver 210 (the magnitude of the vibration of the transducer 511).

The envelope L11 indicates temporal changes in the amplitude value indicating the magnitude of the vibration of the transducer 511. The envelope L11 illustrated in FIG. 4 shows that the transducer 511 is driven to vibrate from timing t0 for time Ta to complete the transmission of a transmission wave at timing t1, and then the vibration of the transducer 511 due to inertia continues while attenuating for time Tb until timing t2. Thus, in the graph illustrated in FIG. 4, time Tb corresponds to a so-called reverberation time.

The envelope L11 reaches a peak at which the magnitude of the vibration of the transducer 511 is greater than or equal to a detection threshold Ith at timing t4 at which time Tp has elapsed since timing t0 at which the transmission of the transmission wave has started. The detection threshold Ith is a value set to determine whether the vibration of the transducer 511 is caused by the reception of a reflected wave from the obstacle O (such as another vehicle, a structure, or a pedestrian) or by the reception of a reflected wave from an object other than the obstacle O (such as the road surface RS). Here, the detection threshold Ith is illustrated as a constant value, but the detection threshold Ith may be a variable value that varies depending on the circumstances. Vibration having a peak higher than or equal to the detection threshold Ith can be regarded as being caused by the reception of a reflected wave from the obstacle O.

The envelope L11 in this example shows that the vibration of the transducer 511 attenuates at and after timing t4. Thus, timing t4 corresponds to the timing at which the reception of the reflected wave from the obstacle O has been completed, in other words, the timing at which the transmission wave transmitted last at timing t1 returns as the reflected wave.

In the envelope L11, timing t3 as the start point of the peak at timing t4 corresponds to the timing at which the reception of the reflected wave from the obstacle O has started, in other words, the timing at which the transmission wave transmitted first at timing t0 returns as the reflected wave. Thus, time ΔT between timing t3 and timing t4 is equal to time Ta as the transmission time of the transmission wave.

From the above, it is necessary to determine time Tf between timing t0 at which the transmission wave has started to be transmitted and timing t3 at which the reflected wave has started to be received, in order to determine the distance from the transmitter and receiver of the ultrasonic wave to the obstacle O, using TOF. This time Tf can be obtained by subtracting time ΔT equal to time Ta as the transmission time of the transmission wave from time Tp as the difference between timing t0 and timing t4 at which the intensity of the reflected wave that has exceeded the detection threshold Ith reaches the peak.

Timing t0 at which the transmission wave has started to be transmitted can be easily determined as the timing at which the object detection device 200 has started operation. Time Ta as the transmission time of the transmission wave is determined in advance by setting or the like. Thus, the distance from the transmitter and receiver to the obstacle O can be obtained by determining timing t4 at which the intensity of the reflected wave reaches the peak higher than or equal to the detection threshold Ith.

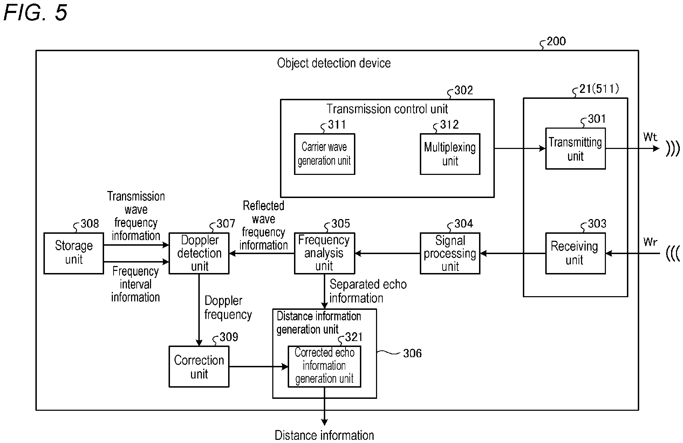

FIG. 5 is a block diagram illustrating an example of a functional configuration of the object detection device 200 according to the embodiment. The object detection device 200 of the present embodiment includes a transmitting unit 301, a transmission control unit 302, a receiving unit 303, a signal processing unit 304, a frequency analysis unit 305, a distance information generation unit 306, a Doppler detection unit 307, a storage unit 308, and a correction unit 309. These functional components 301 to 309 may be implemented, for example, by cooperation of hardware components as illustrated in FIG. 2 and a software component such as a program or firmware. At least some of these functional components 301 to 309 may be implemented by dedicated hardware (such as a circuit).

The transmitting unit 301 transmits the transmission wave Wt in which a plurality of ultrasonic waves of different frequencies are multiplexed. That is, the transmission wave Wt is an ultrasonic wave containing a plurality of frequency components. The transmission wave Wt may be, for example, an ultrasonic wave in which sine waves of different frequencies in a frequency range from 20 kHz up are multiplexed, or the like. The transmitting unit 301 is configured using the above-described transducer 511 or the like.

The transmission control unit 302 performs processing to cause the transmitting unit 301 to transmit the transmission wave Wt containing the plurality of frequency components as described above. The transmission control unit 302 of the present embodiment includes a carrier wave generation unit 311 and a multiplexing unit 312.

The carrier wave generation unit 311 generates a plurality of carrier waves that are sources of the transmission wave Wt. The carrier wave generation unit 311 generates, for example, a plurality of sine waves of different frequencies. The multiplexing unit 312 generates an audio signal in which a plurality of carrier waves (sine waves) of different frequencies are multiplexed. The multiplexing is not to be limited to a particular method, and may use, for example, a method such as orthogonal frequency-division multiplexing (OFDM) or frequency-division multiplexing (FDM). The transmitting unit 301 outputs the transmission wave Wt containing a plurality of frequency components in response to an audio signal generated in this manner.

The receiving unit 303 receives the reflected wave Wr produced by the reflection of the transmission wave Wt from an object. Like the transmission wave Wt, the reflected wave Wr is an ultrasonic wave containing a plurality of frequency components. The receiving unit 303 is configured using the transducer 511, an A/D conversion circuit, and others, and generates an audio signal of the received reflected wave Wr.

The transmitting unit 301 and the receiving unit 303 of the present embodiment are configured using the common transducer 511. That is, the transmission of the transmission wave Wt and the reception of the reflected wave Wr in each transceiver 21 (each of the transceivers 21A to 21L) are performed using the common transducer 511. This reduces paths of the transmission wave Wt and the reflected wave Wr to a bare minimum, and thus can reduce the probability of occurrence of multipath as compared with that when a plurality of transducers are used. Furthermore, it is not necessary to separately provide a transducer for each frequency component, which can prevent an increase in cost.

The signal processing unit 304 performs predetermined signal processing on the audio signal of the reflected wave Wr. The signal processing may include filtering for noise removal, correlation processing to determine the degree of similarity between the transmission wave Wt and the reflected wave Wr, etc.

The frequency analysis unit 305 performs frequency analysis processing on the audio signal of the reflected wave Wr that has undergone the signal processing, and generates reflected wave frequency information indicating the plurality of frequency components contained in the reflected wave Wr. In addition, the frequency analysis unit 305 generates separated echo information indicating temporal changes in amplitude value for each of the plurality of frequency components contained in the reflected wave Wr. The frequency analysis processing may be, for example, a fast Fourier transform (FFT) or the like.

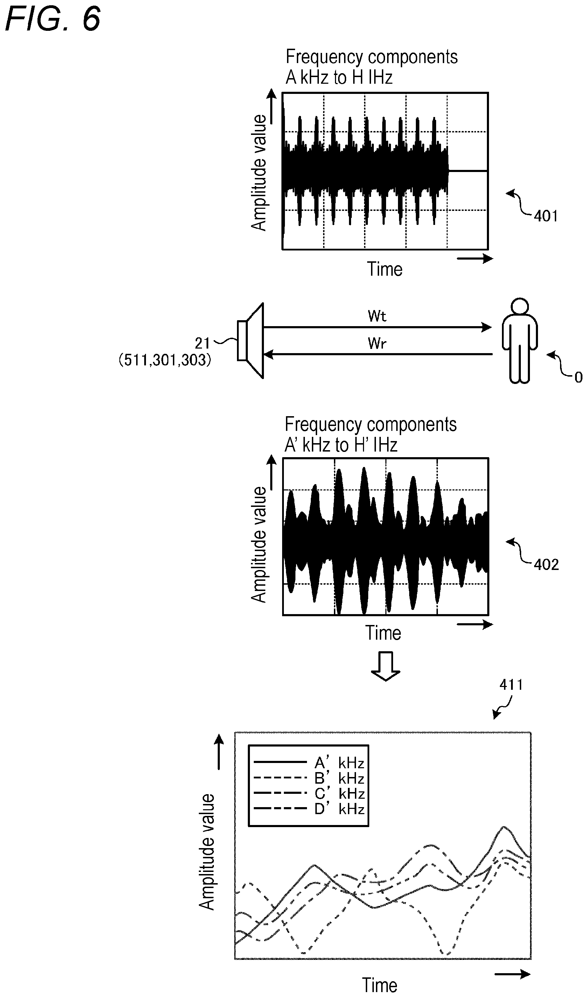

FIG. 6 is a diagram illustrating an example of separated echo information 411 according to the embodiment. FIG. 6 illustrates an audio signal 401 of the transmission wave Wt, an audio signal 402 of the reflected wave Wr, and the separated echo information 411.

Here, a case where the transmission wave Wt contains four types of frequency components A to D, and the reflected wave Wr contains four types of frequency components A' to D' is illustrated as an example. That is, it is assumed that a Doppler shift is occurring between the transmission wave Wt and the reflected wave Wr due to the movement of the transceiver 21 or the obstacle O. The frequency difference between a frequency component (e.g. A) contained in the transmission wave Wt and the corresponding frequency component (e.g. A') contained in the reflected wave Wr (e.g. A' - A) is referred to as a Doppler frequency. The reflected wave frequency information in the present embodiment is information indicating the Doppler-shifted frequency components A' to D'.

The separated echo information 411 is generated based on the results of FFT analysis on the audio signal 402 of the reflected wave Wr. In a graph of the separated echo information 411, the horizontal axis corresponds to elapsed time since the transmission of the transmission wave Wt, and the vertical axis corresponds to the amplitude value of the reflected wave Wr. The separated echo information 411 indicates temporal changes in the amplitude value for each of the four types of the frequency components A' to D' contained in the reflected wave Wr.

The separated echo information 411 shows that the frequency components vary in their amplitude value. These variations in the amplitude value are considered to be due to the effects of multipath on the reflected wave Wr (e.g., the cancelling each other out of the amplitudes by anti-phase waves or the like). The object detection device 200 of the present embodiment includes means for reducing such multipath effects.

Returning to FIG. 5, the distance information generation unit 306 generates distance information about the distance from a reference position (e.g., the installation position of the transceiver 21 or the like) to an object (obstacle O), based on the separated echo information 411. The distance information is output, for example, to the ECU 100 (see FIG. 2) and others, and is used for automatic driving control, danger avoidance control, etc. of the vehicle 1.

The distance information generation unit 306 of the present embodiment includes a corrected echo information generation unit 321. The corrected echo information generation unit 321 generates corrected echo information, based on a maximum amplitude value that is the largest of a plurality of amplitude values detected for the individual frequency components at the same time, obtained from the separated echo information 411. The corrected echo information may be, for example, information indicating temporal changes in the maximum amplitude value, or the like.

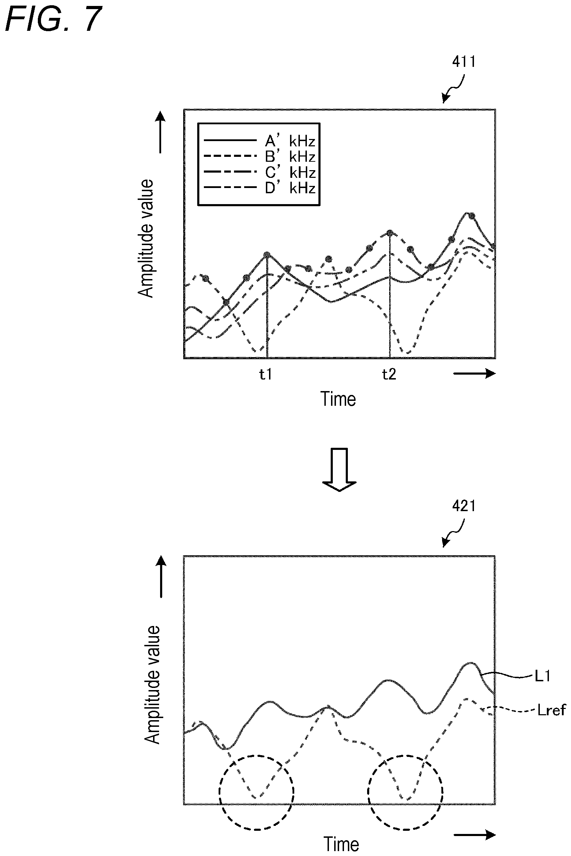

FIG. 7 is a diagram illustrating an example of corrected echo information 421 according to the embodiment. The corrected echo information 421 is generated by generating a maximum value line L1 indicating temporal changes in a plurality of maximum amplitude values (amplitude values corresponding to dot positions in FIG. 7) obtained from the separated echo information 411. For example, the maximum amplitude value corresponding to timing t1 is the amplitude value of A' (a solid line), and the maximum amplitude value corresponding to timing t2 is the amplitude value of C' (an alternate long and short dash line). By obtaining a plurality of maximum amplitude values like these at predetermined time intervals, the maximum value line L1 can be generated.

In the corrected echo information 421 illustrated in FIG. 7, the maximum value line L1 is compared with a reference line Lref indicating temporal changes in the amplitude value of a single frequency component (in this example, a line corresponding to the frequency component B). As indicated by the reference line Lref, in the single frequency component, time periods in which the amplitude value significantly drops due to multipath effects appear. In the maximum value line L1, such time periods do not exist. By calculating TOF corresponding to the obstacle O (TOF corresponding to the peak exceeding the detection threshold Ith) by, for example, the method as illustrated in FIG. 4, using the maximum value line L1 like this, the distance to the obstacle O can be calculated with high accuracy.

Returning to FIG. 5, the Doppler detection unit 307 calculates the Doppler frequency, based on the reflected wave frequency information, transmission wave frequency information, and frequency interval information 308. As described above, the reflected wave frequency information is information indicating the plurality of frequency components A' to D' contained in the reflected wave Wr. The transmission wave frequency information is information indicating the plurality of frequency components A to D contained in the transmission wave Wt. The frequency interval information is information indicating the interval between the plurality of frequency components A to D contained in the transmission wave Wt (the frequency difference between two adjacent frequency components). The interval may be constant or vary for all the intervals between the plurality of frequency components A to D. The transmission wave frequency information and the frequency interval information may be stored in the storage unit 308 in advance or may be obtained from the transmission control unit 302. Based on the frequency interval information, for example, the Doppler detection unit 307 interpolates loss of the plurality of frequency components A' to D' contained in the reflected wave Wr, and calculates the Doppler frequency based on the difference between the interpolated frequency components A' to D' and the frequency components A to D of the transmission wave Wt.

The correction unit 309 corrects the distance information generated by the distance information generation unit 306, based on the Doppler frequency detected by the Doppler detection unit 307.

Here, when calculating the Doppler frequency, it is necessary to accurately detect the frequency components of the reflected wave Wr. When drops in the amplitude value due to multipath effects (see the reference line Lref in FIG. 7) or the like occurs as described above, the frequency components of the reflected wave Wr may not be able to be accurately detected. Therefore, the Doppler detection unit 307 of the present embodiment interpolates a frequency component lost due to the effects of multipath or the like, using the frequency interval information, and calculates the Doppler frequency using the interpolated frequency components.

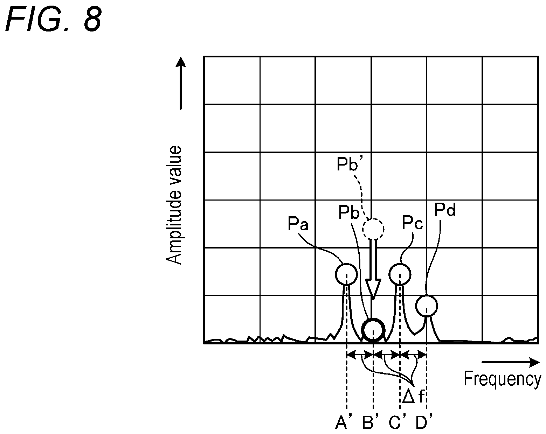

FIG. 8 is a diagram illustrating an example of FFT analysis results on the reflected wave Wr in the embodiment. A graph illustrated in FIG. 8 is an example of analysis results corresponding to one time window in the FFT analysis on the reflected wave Wr. Here, a case where peaks Pa to Pd have been detected for the four types of the frequency components A' to D' contained in the reflected wave Wr, respectively, is illustrated as an example. Δf represents the interval (frequency difference) between the plurality of frequency components A to D contained in the transmission wave Wt. The interval Δf is a value that can also be applied to the interval between the plurality of frequency components A' to D' of the reflected wave Wr.

FIG. 8 illustrates a state in which the peak Pb of the frequency component B' has dropped significantly below an original peak Pb'. Such a phenomenon can occur due to multipath effects as described above. When such a phenomenon occurs, the amplitude value of the peak Pb becomes lower than the threshold, and it is highly probable that the frequency component B' will not be detected.

Therefore, the Doppler detection unit 307 of the present embodiment complements the missing frequency component B' using the interval Δf. For example, the missing frequency component B' can be interpolated by adding or subtracting the interval Δf with respect to the other detected frequency components A', C', and D' of the peaks Pa, Pc, and Pd. Then, by determining the difference between the frequency components of the reflected wave Wr interpolated in this manner and the frequency components of the transmission wave Wt, the Doppler frequency can be calculated with high accuracy.

It is also conceivable that the frequency component A', for example, drops below the original peak Pa. At that time, the amount of the Doppler shift can be predicted from the vehicle speed of the vehicle, and thus, the missing frequency component A' of the peak Pa can be interpolated by adding or subtracting the interval Δf with respect to the other detected frequency components B', C', and D' of the peaks Pb, Pc, and Pd. For the frequency component A', the value of A' for which the amount of the Doppler shift has been predicted is compared with the value at the interval Δf from the frequency component B' to determine consistency so that the Doppler frequency can be calculated with high accuracy.

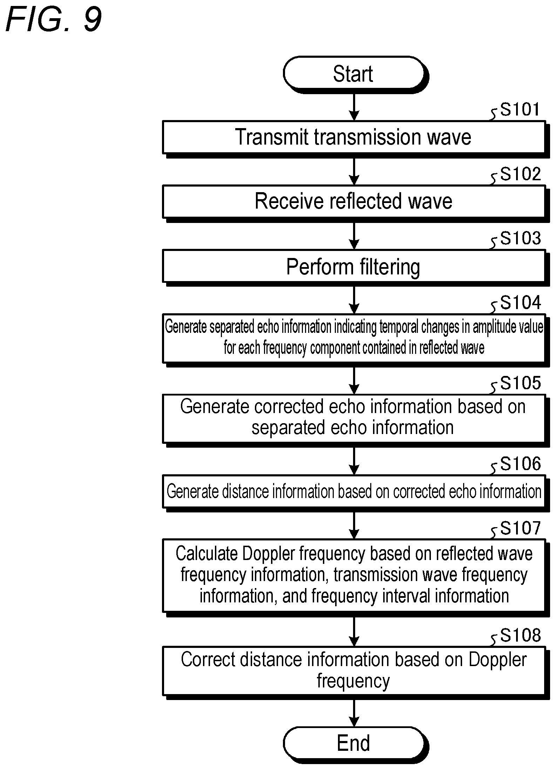

FIG. 9 is a flowchart illustrating an example of processing in the object detection device 200 according to the embodiment. When the execution of object detection processing is started, the transmitting unit 301 transmits the transmission wave Wt (S101), and the receiving unit 303 receives the reflected wave Wr (S102). At this time, the transmission of the transmission wave Wt and the reception of the reflected wave Wr are preferably performed by the common transducer 511 (the single transceiver 21).

The signal processing unit 304 performs filtering on the audio signal 402 of the reflected wave Wr (S103). The frequency analysis unit 305 performs frequency analysis processing on the filtered reflected wave Wr, generating the separated echo information 411 indicating temporal changes in the amplitude value for each frequency component contained in the reflected wave Wr (S104). The distance information generation unit 306 (the corrected echo information generation unit 321) generates the corrected echo information 421 indicating temporal changes in the maximum amplitude value, based on the separated echo information 411 (S105). Then, the distance information generation unit 306 generates distance information about the distance to the obstacle O, based on the corrected echo information 421 (S106).

The Doppler detection unit 307 calculates the Doppler frequency based on the reflected wave frequency information, the transmission wave frequency information, and the frequency interval information (S107). At this time, for example, the Doppler detection unit 307 interpolates a frequency component lost due to the effects of multipath or the like among the plurality of frequency components contained in the reflected wave Wr by the frequency interval information (interval Δf), and calculates the Doppler frequency based on the difference between the interpolated frequency components of the reflected wave Wr and the frequency components of the transmission wave Wt. Then, the correction unit 309 corrects the frequency distance information based on the Doppler frequency (S 108).

As described above, according to the present embodiment, the Doppler frequency can be calculated with high accuracy, using frequency interval information indicating the interval between a plurality of frequency components contained in a transmission wave, and highly accurate distance information can be generated. This can reduce the effects of multipath and the like to improve obstacle detection accuracy.

### (Modification)

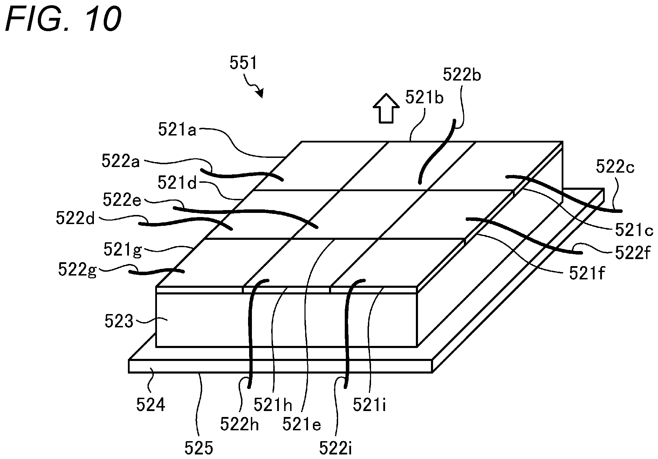

FIG. 10 is a perspective view illustrating an example of a configuration of a transducer 551 according to a modification. The transducer 551 of the present modification includes nine (3 × 3) upper electrodes 521a to 521i, nine upper wires 522a to 522i, a piezoelectric body 523, a lower electrode 524, and lower wiring 525. The nine upper electrodes 521a to 521i are provided in different areas on the upper surface of the piezoelectric body 6, and are electrically insulated from each other. The nine upper wires 522a to 522i are connected to the upper electrodes 521a to 521i, respectively.

The above configuration allows the application of different voltages to the nine upper electrodes 521a to 521i to output ultrasonic waves of different frequencies from the upper electrodes 521a to 521i. That is, the transducer 551 of the above configuration allows the input of an audio signal of a single frequency to each of the upper electrodes 521a to 521i to generate the transmission wave Wt containing a plurality of frequency components as described above. This can omit a mechanism to generate a multiplexed signal by multiplexing a plurality of frequencies.

A program to cause a computer (e.g. the processor 223 or the like) to perform processing to implement various functions in the above-described embodiment can be recorded in an installable-format or executable-format file on a computer-readable recording medium such as a compact disc (CD)-ROM, a flexible disk (FD), a CD-recordable (R), or a digital versatile disk (DVD), to be provided. Alternatively, the program may be provided or distributed via a network such as the Internet.

Although the embodiment of the present disclosure has been described above, the embodiment and its modification described above are merely examples, and are not intended to limit the scope of the invention. The above-described novel embodiment and modification can be implemented in various forms, and various omissions, substitutions, and changes can be made without departing from the gist of the invention. The above-described embodiment and modification are included in the scope and gist of the invention, and are included in the invention described in the claims and the scope of its equivalents.

### REFERENCE SIGNS LIST

1: Vehicle, 2: Vehicle body, 21, 21A to 21L: Transceiver, 50: Vehicle control system, 100: ECU, 110: Input and output device, 120: Storage device, 130: Processor, 200: Object detection device, 220: Controller, 221: Input and output device, 222: Storage device, 223: Processor, 301: Transmitting unit, 302: Transmission control unit, 303: Receiving unit, 304: Signal processing unit, 305: Frequency analysis unit, 306: Distance information generation unit, 311: Carrier wave generation unit, 312: Multiplexing unit, 321: Corrected echo information generation unit, 411: Separated echo information, 421: Corrected echo information, 511, 551: Transducer, 521, 521a to 521i: Upper electrode, 522, 522a to 522i: Upper wire, 523: Piezoelectric body, 524: Lower electrode, 525: Lower wiring, L1: Maximum value line, O: Obstacle, RS: Road surface, Wt: Transmission wave, Wr: Reflected wave, and Δf: Interval

## Claims

1. An object detection device comprising:
a transmitting unit configured to transmit a transmission wave in which a plurality of ultrasonic waves of different frequencies are multiplexed;
a receiving unit configured to receive a reflected wave produced by reflection of the transmission wave from an object;
a frequency analysis unit configured to generate reflected wave frequency information indicating a plurality of frequency components contained in the reflected wave, and separated echo information indicating temporal changes in amplitude value for each of the plurality of frequency components contained in the reflected wave;
a distance information generation unit configured to generate distance information about a distance to the object, based on the separated echo information;
a Doppler detection unit configured to calculate a Doppler frequency, based on the reflected wave frequency information, transmission wave frequency information indicating a plurality of frequency components contained in the transmission wave, and frequency interval information indicating an interval between the plurality of frequency components contained in the transmission wave; and
a correction unit configured to correct the distance information, based on the Doppler frequency.

2. The object detection device according to claim 1, wherein
the Doppler detection unit interpolates loss of the plurality of frequency components contained in the reflected wave, based on the frequency interval information, and calculates the Doppler frequency, based on a difference between the interpolated frequency components of the reflected wave and the frequency components of the transmission wave.

3. The object detection device according to claim 1, wherein
the distance information generation unit generates the distance information, based on a maximum amplitude value that is the largest of a plurality of the amplitude values detected for the individual frequency components at the same time, the maximum amplitude value being obtained from the separated echo information.

4. The object detection device according to claim 3, wherein
the distance information generation unit generates the distance information, based on corrected echo information indicating temporal changes in the maximum amplitude value.

5. The object detection device according to any one of claims 1 to 4, wherein
transmission of the transmission wave and reception of the reflected wave are performed using a common transducer.
